Europäisches Patentamt

European Patent Office

Office européen des brevets

(19)

(11) Publication number: **0 306 899 B1**

# EUROPEAN PATENT SPECIFICATION

(12)

(45) Date of publication of patent specification: **11.12.91**   (51) Int. Cl.⁵: **B23P 15/26**

(21) Application number: **88114538.7**

(22) Date of filing: **06.09.88**

(54) Method of making heat exchanger and hollow shape for such.

(30) Priority: **08.09.87 DE 3730117**

(43) Date of publication of application:
**15.03.89 Bulletin 89/11**

(45) Publication of the grant of the patent:
**11.12.91 Bulletin 91/50**

(84) Designated Contracting States:
**AT DE ES FR GB IT NL SE**

(56) References cited:
**EP-A- 186 130        EP-A- 188 314**
**DE-A- 2 552 348      DE-A- 3 713 781**
**US-A- 2 401 542      US-A- 3 662 582**
**US-A- 4 352 450      US-A- 4 579 605**

(73) Proprietor: **NORSK HYDRO A.S.**
**Bygdoy Allé 2**
**N-0257 Oslo 2(NO)**

(72) Inventor: **Knoll, Richard, Jr.**
**1835 S. Atlantic Ave. No. 470**
**Cocoa Beach, Fl. 32932(US)**

(74) Representative: **WILHELMS, KILIAN & PART-**
**NER Patentanwälte et al**
**Eduard-Schmid-Strasse 2**
**W-8000 München 90(DE)**

## Description

The invention relates to a method of forming a heat exchanger in particular a motor vehicle radiator and to a hollow section of tubing for use in such a method, as defined in the pre-characterising portion of Claims 1 and 6,7 respectively.

From the US-A-3 662 582 a method of forming a heat exchanger is already known comprising forming hollow sections of tubing each having at least one longitudinally inwardly extending web reshaping each of said sections of tubing into respective flattened hollow tubes with two parallel sides and assembling said hollow tubes.

With this known method it is started from hollow sections of tubing having a round cross-section formed for example by brazing. The pre-characterising portion of Claim 1 is based on the disclosure of the document US-A-3662582

Furthermore, from the EP-A-188314 or from the EP-A-186130 metallic hollow sections of tubings having an oval cross-section are known to be used for forming a heat exchanger. The pre-characterising portion of Claims 6 and 7 is based on the disclosure of the document EP-A-188 314

Hitherto, radiators, in particular water radiators for internal-combustion engines of motor vehicles, have been made in Europe to about 20% from conventional brass and copper tubes and to about 80% from aluminium tubes.

Aluminium radiators, which due to their higher efficiency and their lower weight are preferred to the radiators of brass and copper tubes, are made in the form of plug-type radiators with plugged aluminium tubes or using welded aluminium tubes. The proportion of plug-type radiators of aluminium is about 50%, while the proportion of radiators of welded aluminium tubes is about 30%.

Radiators with welded aluminium tubes are in particular used in internal-combustion engines in which a high cooling power is required, as is the case in particular in engines for small trucks and high-performance engines for automobiles. The welded tubes for such radiators are made in that metal sheets are rounded from strip metal and welded by pressure welding in the longitudinal direction at one side. These tubes have a flat profile, in contrast to the tubes for plug-type radiators which have a circular profile, and are coated on the outside with AlSi alloys. This silicon coating is applied during the rolling of the sheet metal itself prior to the round forming and serves to enable the welded tubes to be subsequently soldered to the water tank and the cooling fins.

This soldering of the welded flat tubes, which consist of e.g. an Al Mg Si 0.5 or an Al Mn alloy, to the water tank and the cooling fins of the same or similar material is made by brazing or hard soldering at a temperature above 450°C, in particular at 607 to 636°C, with the aid of flux or under vacuum without flux.

Both these possibilities of soldering the welded tubes to the fins and the water tank involve serious problems. When soldering with a flux the environmental problems are serious because detrimental substances are liberated by the flux and being very aggressive to aluminium and iron sheet and must therefore be washed off the soldered radiator to prevent the latter corroding. Furthermore, the arisen fumes must also be removed from the air to prevent sheet metal possibly pressed in the vicinity for the vehicle bodyworks from being attacked. For this purpose air cleaning is necessary, which involves high costs. When soldering without flux said problems, due to detrimental substances, admittedly do not occur, but because this soldering must take place under vacuum and requires extremely accurate temperature control high costs are also involved. Due to the high temperature of the soldering under vacuum in addition only a short holding time in the soldering furnace is possible so that at the soldering joint a spot tends to be formed rather than an area contact, and this impairs the thermal conductivity at this point.

In radiators hitherto having such welded flat tubes usually two tubes are arranged parallel to each other, each having a width of for example 22 mm. This width means the outer dimension of the tubes in the direction of the larger major axis of the flat profile. It has, however, been found that the cooling efficiency increases with increasing outer diameter so that preferably only one flat tube with correspondingly larger width should be provided. In the manufacture of the radiators, however, the flat tubes are laterally screwed and pressed to the fins before the soldering to obtain a continuous exactly defined area contact between the two components, and thereafter soldered in the furnace. Due to the pressure on the flat tube in the pressing and the temperature obtaining in the furnace during soldering, however, a deformation (collapse) of the side faces of the flat profile occurs in the furnace because the aluminium becomes soft and sinks in due to the pressure applied. This effect occurs in particular due to the fact that the aluminium tubes have a very small wall thickness of for example only 0.4 mm.

Furthermore, after the soldering of the tubes and the fins the core of the radiator formed in this manner is fitted into the radiator housing or into a radiator bottom, and this operation must not cause any stress in the assembled radiator. However, due to the deformation of the components during soldering the necessary exact fit is difficult to achieve.

The problems regarding the collapse of the tubes and the lack of an exact fit become even more serious when for increasing the efficiency wider flat profile tubes are to be used. Due to the aforementioned deformation of the tubes during soldering the waste in production then increases, and because of the silicon coating of the tubes this leads to a further problem because these reject radiators cannot simply be scrapped.

It is therefore an object of the present invention to avoid the above problems and to provide a method of making heat exchangers, in particular a motor vehicle radiator and a hollow shape for use in such a method, by which high-performance radiators of aluminium with high efficiency can be made.

For this purpose the method according to the present invention comprises the steps mentioned in the characterizing part of the patent claim 1.

Preferred embodiments of the method according to the present invention are subject-matter of the patent claims 2 to 5.

The extruded metallic hollow section of tubing to be used in the method according to the present invention is constructed as it is stated in the claims 6 or 7. Preferred embodiments of the hollow section of tubing are subject-matter of the patent claims 8 and 9.

Thus, in the method according to the invention none of the welded tubes are used, but extruded hollow shapes provided by a conventional extrusion press or Conform machine, said shapes being provided with at least one web situated in the shape cavity having a triple function: Firstly, the web ensures during a subsequent rolling of the shape that flat profiled tubes are formed, where the wide sides of the flat profile lie exactly parallel to another. Secondly, said web effects a rigidity of the shapes giving a better stability during the rolling or drawing operation and obtaining a higher dimensional stability with wide flat shapes. At last it also represents a turbulator which, when used for example as water cooler, ensures a turbulent flow of the water circulating in the tubes, thus resulting in a lower flow rate of the water and a higher cooling efficiency.

Due to the webs provided in the hollow shapes tubes of greater outer diameter of up to 40 mm can thus be used for making a heat exchanger, in particular a motor vehicle radiator, with high efficiency.

In a particular embodiment of the shapes according to the invention the shapes made of aluminium or Al-alloy are provided with a zinc coating or a coating with an alloy on a zinc basis. The resulting tubes may then be soft-soldered to the cooling fins at a temperature below 450°C, and this contributes to the dimensional stability of the tubes compared to hard-soldering of the welded tubes because at these temperatures by nature a reduced deformation of the aluminium material is to be expected.

Hereinafter the invention will be described in more details and by examples of preferred embodiments with the aid of the attached drawings, Figs. 1-3, wherein:

Fig 1 is a first example of embodiment of the hollow shape according to the invention in the extruded state in Fig. 1A and in the rolled state as a finished tube in Fig. 1B.

Fig. 2 is a second example of embodiment of the hollow shape according to the invention in the extruded state in Fig. 2A and in the rolled state in Fig. 2B, and

Fig. 3 is a third example of embodiment of the hollow shape according to the invention in the extruded state in Fig. 3A and in the rolled sate in Fig. 3B.

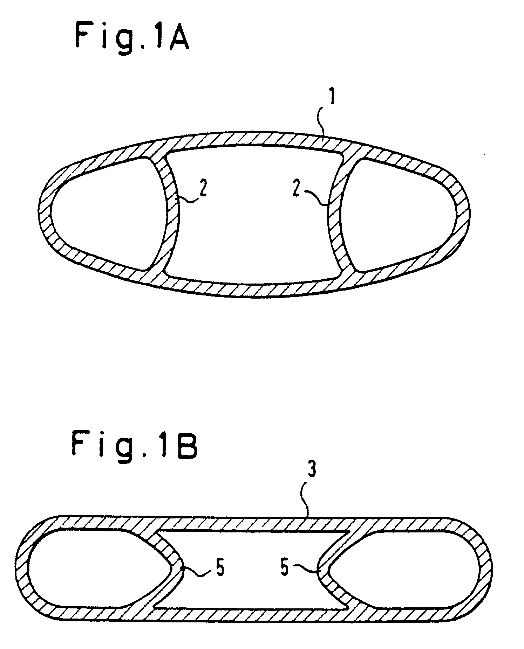

An example of embodiment of the hollow shape according to the invention used for making a motor vehicle radiator by the method according to the invention is shown in Fig. 1 of the attached drawings. The shape 1 shown in Fig. 1A having an oval cross-section and made of aluminium alloy, e.g. of Al Mg Si 0.5 or Al Mn, has an oval cross-section with an outer diameter in the direction of the smaller major axis of for example 4 to 6 mm and an outer radius at the two outer sides of 1.2 mm. In the cavity of the shape two webs are formed which extend continuously from one inner face to the other transversely of the direction of the large major axis of the oval cross-section and in the longitudinal direction of the shape. These transverse webs 2 have a thickness substantially equal to the wall thickness of the shape 1. The transverse webs are provided with a preformed curvature in the transverse direction. As illustrated in Fig. 1B this curvature serves to cause the webs 2 to buckle in on rolling of the shape 1 illustrated in Fig. 1A so that the resulting half-circular webs 5 illustrated in Fig. 1B reinforce the flat arisen tube 3 as well as serving as turbulator for the water to be cooled flowing through. The flat tube illustrated in Fig. 1B may have an outer dimension in the direction of the shorter major axis of 2 mm, the outer radius at the two sides remaining unchanged 1.2 mm. The example of embodiment of the hollow shape according to the invention shown in Fig. 1A may have a width, i.e. outer dimension in the direction of the larger major axis, such that the flat tube illustrated in Fig. 1B has corresponding outer dimensions of for example 32 mm to 40 mm without the dimensional accuracy and exact fit being impaired by the following soldering operation.

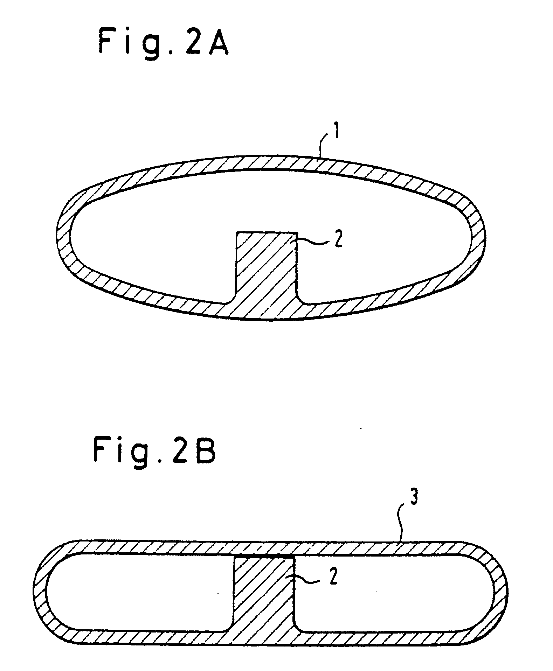

In Fig. 2A a further example of embodiment of the hollow shape 1 according to the invention is shown, which comprises a single web protrusion 2 in the cavity which is integrally formed on an inner side of the shape. The web 2 has a height which corresponds to the height of the interior of the flat tube in Fig. 2B after rolling. It is ensured in this manner that the two outer sides of the flat tube in Fig. 2B extend exactly parallel due to the support by the web 2. The tube illustrated in Fig. 2A can for example have an outer dimension in the direction of the shorter major axis of 4 to 6 mm, a height of the web 2 of 1.6 mm and a wall thickness of 0.4 mm.

This gives after the rolling a flat tube 3 which is illustrated in Fig. 2B and has an outer dimension in the direction of the shorter major axis of 2.4 mm, a height of the interior of 1.6 mm and a width, i.e. an outer dimension in the direction of the larger major axis, of 32 mm. The outer radius at the two sides is once again 1.2 mm.

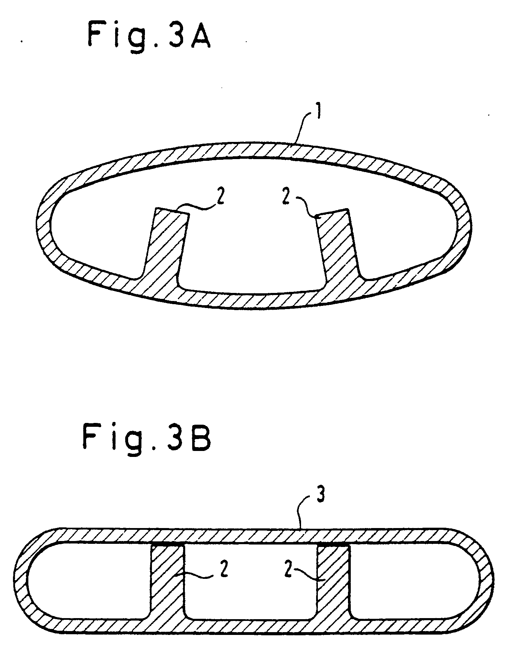

Finally, Fig. 3 shows a third example of embodiment of the hollow shape 1 according to the invention which comprises two webs 2 which are integrally formed at an inner side of the shape 1 at a predetermined angle at the same distance apart and from the sides of the hollow shape 1. This angle is chosen so that the webs 2 in the rolled flat tube 3, which is shown in Fig. 3B, are perpendicular to the inner faces. The webs 2 again have a height corresponding to the height of the interior of the flat tube 3 in Fig. 3B. The remaining dimensions correspond to the dimensions of the example of embodiment illustrated in Fig. 2. Since in the example of embodiment illustrated in Fig. 3 two webs 2 are provided, a still greater stability of the tube results along with a more pronounced swirl formation, i.e. turbulence, of the medium to be cooled flowing in the interior when the profile is used in a radiator so that still wider tube profiles can be used in a radiator so that still wider tube profiles can be employed and thus motor vehicle radiators made having extremely high efficiency, as required for example for the engines of commercial vehicles.

Although several preferred embodiments of the invention have been described it is apparent that modifications may be made therein by people skilled in the art. Such modifications may be made without departing from the scope of the invention as set forth in the appended claims, e.g. the hollow shapes can be made of other metals than the disclosed Al-alloy and with other configurations of the cross-section than the illustrated oval one.

**Claims**

1. A method of forming a heat exchanger comprising
    - forming hollow sections of tubing each having at least one longitudinally inwardly extending web,
    - reshaping each of said sections of tubing into respective flattened hollow tubes with two parallel sides and
    - assembling said hollow tubes characterized in that
    - the hollow sections of tubing are formed by extruding and each have an oval cross-section with predetermined radii of curvature at the outer sides in the direction of the larger major axis, the web extending in a direction transverse to the larger major axis,
    - said hollow sections of tubing are reshaped such that the web forms an internal partition that establishes a predetermined transverse width of the hollow tubes and
    - the hollow tubes are assembled to external cooling fins thereby forming a heat exchanger core.

2. A method according to claim 1, characterized in that the hollow sections of tubing are reshaped while said predetermined radii of curvature are maintained whereby the radii of curvature of the flattened hollow tubes remain the same as those formed in the step of extrusion.

3. A method according to claim 1, characterized in that hollow sections of tubing of aluminium or aluminium alloy are extruded.

4. A method according to claim 3, characterized in that the hollow tubes are coated with zinc or an alloy on a zinc basis and thereafter soldered to the coolling fins, and the assembly of tubes and cooling fins is fitted into a radiator housing.

5. A method according to claim 4, characterized in that the tubes coated with zinc are soft-soldered to the cooling fins at a temperature below 450° C.

6. Extruded metallic hollow section (1) of tubing having an oval cross-section for use in the method according to claim 1, characterized in that the cavity of the section of tubing is provided with at least one web (2) integrally formed and inwardly extending in the longitudinal direction of the hollow section (1) and situated transversely to the larger major axis of the oval cross-section of the section of tubing, the web (2) being made integrally extending from one inner face to the other inner face of the hollow section (1) and being provided with a curvature in the transverse direction of the section (1).

7. Extruded metallic hollow section (1) of tubing having an oval cross-section for use in the method according to claim 1, characterized in that the cavity of the section of tubing is provided with at least one web (2) integrally formed and inwardly extending in the longitudinal direction of the hollow section (1) and situated transversely to the large major axis of the oval cross-section of the section of tubing, the web (2) being formed integrally on one inner face of the hollow section of tubing (1) and having a height which is equal to the desired height of the interior space which the tube is to have after the reshaping into a flat tube (3).

8. A section of tubing according to claim 7, characterized in that the web (2) is provided protruding in the center of the section (1) in the direction of the larger major axis.

9. A section of tubing according to claim 7, characterized in that two webs (2) are provided situated at the same distance from each other and from the section ends in the direction of the larger major axis.

**Revendications**

1. Procédé de fabrication d'un échangeur de chaleur comprenant :
   - la formation de tronçons de tubulure creux, chacun ayant au moins une paroi s'étendant vers l'intérieur longitudinalement
   - le refaçonnage de chacun desdits tronçons de tubulure an des tubes creux aplatis respectifs munis de côtés parallèles et
   - l'assemblage desdits tubes creux caractérisé en ce que
   - les tronçons de tubulure creux sont fabriqués par extrusion et comportent chacun une section transversale ovale dont les rayons de courbure, aux côtés extérieurs dans la direction du grand axe principal, sont prédéterminés, la paroi s'étendent dans la direction transversale au grand axe principal,
   - lesdits tronçons de tubulure creux sont refaçonnés de telle façon que la paroi forme une séparation interne définissant une largeur transversale prédéterminée des tubes creux et
   - les tubes creux sont assemblés à des ailes de refroidissement extérieures de façon à former un noyau d'échangeur de chaleur.

2. Procédé selon la revendication 1, caractérisé en ce que les tronçons de tubulure creux sont refaçonnés tandis que lesdits rayons de courbure prédéterminés sont maintenus, de façon que les rayons de courbure des tubes creux aplatis soient conservés identiques à ceux formés pendant l'étape d'extrusion.

3. Procédé selon la revendication 1, caractérisé en ce que des tronçons de tubulure creux en aluminium ou en alliage d'aluminium sont extrudés.

4. Procédé selon la revendication 3, caractérisé en ce que les tubes creux sont recouverts d'une couche de zinc ou d'un alliage à base de zinc et par la suite sont brasés à des ailes de refroidissement, et l'assemblage de tubes et d'ailes de refroidissement est fixé dans un bâti de radiateur.

5. Procédé selon la revendication 4, caractérisé en ce que les tronçons de tubulure recouverts d'une couche de zinc sont brasés tendre aux ailes de refroidissement à une température inférieure à 450° C.

6. Tronçon (1) de tubulure creux métallique extrudé ayant une section transversale ovale destiné à être utilisé dans le procédé selon la revendication 1, caractérisé en ce que la cavité du tronçon de tubulure est munie d'au moins une paroi (2) venue de matière et s'étendant vers l'intérieur dans la direction longitudinale du tronçon (1) creux et disposée transversalement au grand axe principal de la section trsnsversale ovale du tronçon de tubulure, la paroi (2) étant venue de matière de façon à s'étendre d'une face interne à l'autre face interne du tronçon (1) creux et étant munie d'une courbure dans la direction transversale du tronçon (1).

7. Tronçon (1) de tubulure creux métallique extrudé ayant une section transversale ovale destiné à être utilisé dans le procédé selon la revendication 1, caractérisé en ce que la cavité du tronçon de tubulure est munie d'au moins une paroi (2) venue de matière et s'étendent vers l'intérieur dans la direction londitudinale du tronçon creux et disposée transversalement au grand axe principal de la section transversale ovale du tronçon de tubulure, la paroi (2) étant venue de matière sur une face interne du tronçon (1) de tubulure creux et ayant une hauteur qui est égale à la hauteur voulue de l'espace intérieur que le tube doit avoir après son refaçonnage en tube (3) plat.

8. Tronçon de tubulure selon la revendication 7, caractérisé en ce que la paroi (2) est disposée de façon saillante au oentre du tronçon (1) dans la direction du grand axe principal.

9. Tronçon de tubulure selon la revendication 7, caractérisé en ce que deux parois (2) sont disposées à des distances identiques entre elles et entre les extrémités du tronçon dans la direction du grand axe principal.

## Patentansprüche

1. Verfahren zum Herstellen eines Wärmetauschers, bei dem
   - Hohlrohrstücke gebildet werden, von denen jedes wenigstens einen längs und nach innen verlaufenden Steg aufweist,
   - jedes Rohrstück in ein jeweiliges abgeflachtes Hohlrohr mit zwei parallelen Seiten umgeformt wird, und
   - die Hohlrohre zusammengesetzt werden,
   dadurch gekennzeichnet, daß
   - die Hohlrohrstücke durch Extrudieren gebildet werden und jeweils einen ovalen Querschnitt mit bestimmten Krümmungsradien an den Außenseiten in Richtung der größeren Hauptachse haben, wobei der Steg in eine Richtung quer zur größeren Hauptachse verläuft,
   - die Hohlrohrstücke so umgeformt werden, daß die Stege eine innere Trennwand bilden, die eine bestimmte Breite in Querrichtung der Hohlrohre bestimmt, und
   - die Hohlrohre mit äußeren Kühlrippen zusammengesetzt werden, wodurch ein Wärmetauscherkern gebildet wird.

2. Verfahren nach Anspruch 1, dadurch gekennzeichnet, daß die Hohlrohrstücke umgeformt werden, während die bestimmten Krümmungsradien beibehalten werden, wodurch die Krümmungsradien der abgeflachten Hohlrohre die gleichen wie diejenigen sind, die im Schritt der Extrusion gebildet werden.

3. Verfahren nach Anspruch 1, dadurch gekennzeichnet, daß Hohlrohrstücke aus Aluminium oder einer Aluminiumlegierung extrudiert werden.

4. Verfahren nach Anspruch 3, dadurch gekennzeichnet, daß die Hohlrohre mit Zink oder einer Legierung auf Zinkbasis beschichtet werden und danach an die Kühlrippen gelötet werden, und daß die Anordnung aus Rohren und Kühlrippen in ein Kühlergehäuse gepaßt wird.

5. Verfahren nach Anspruch 4, dadurch gekennzeichnet, daß die mit Zink beschichteten Rohre an die Kühlrippen bei einer Temperatur unter 450° C weichgelötet werden.

6. Extrudiertes metallisches Hohlrohrstück (1) mit einem ovalen Querschnitt zur Verwendung bei dem Verfahren nach Anspruch 1, dadurch gekennzeichnet, daß der Hohlraum des Rohrstükkes mit wenigstens einem Steg (2) versehen ist, der in einem Stück mit dem Hohlrohrstück (1) ausgebildet und in Längsrichtung des Hohlrohrstücks (1) und nach innen verläuft und quer zur größeren Hauptachse des ovalen Querschnittes des Rohrstückes angeordnet ist, wobei der Steg (2) in einem Stück so ausgebildet ist, daß er von einer Innenfläche zur anderen Innenfläche des Hohlrohrstückes (1) verläuft und mit einer Krümmung in Querrichtung des Stückes (1) versehen ist.

7. Extrudiertes metallisches Hohlrohrstück (1) mit einem ovalen Querschnitt zur Verwendung bei dem Verfahren nach Anspruch 1, dadurch gekennzeichnet, daß der Hohlraum des Rohrstükkes mit wenigstens einem Steg (2) versehen ist, der in einem Stück mit dem Hohlrohrstück (1) ausgebildet ist und in Längsrichtung des Hohlrohrstückes (1) und nach innen verläuft und quer zur größeren Hauptachse des ovalen Querschnittes des Rohrstückes angeordnet ist, wobei der Steg (2) in einem Stück an einer Innenfläche des Hohlrohrstückes (1) ausgebildet ist und eine Höhe hat, die gleich der gewünschten Höhe des Innenraumes ist, den das Rohr nach dem Umformen in ein flaches Rohr (3) haben soll.

8. Rohrstück nach Anspruch 7, dadurch gekennzeichnet, daß der Steg (2) so vorgesehen ist, daß er in Richtung der größeren Hauptachse in der Mitte des Rohrstückes (1) vorsteht.

9. Rohrstück nach Anspruch 7, dadurch gekennzeichnet, daß zwei Stege (2) vorgesehen sind, die in Richtung der größeren Hauptachse im gleichen Abstand voneinander und von den Enden des Rohrstückes angeordnet sind.

## Fig.1A

## Fig.1B

# Fig.2A

# Fig.2B

# Fig. 3A

# Fig. 3B